# EUROPEAN PATENT APPLICATION

(11) **EP 4 386 244 A1**
(43) Date of publication of application: **19.06.2024**
(21) Application number: 22306897.4
(22) Date of filing: 15.12.2022
(51) Int. Cl.: F16L 1/23, F16L 1/15

(54) **CLAMP FOR HOLDING A FLEXIBLE SLENDER STRUCTURE**

(71) Applicant: Nexans, 92400 Courbevoie (FR)
(72) Inventor: ROGNSA, Gregard, 3470 SLEMMESTAD (NO); UTNE, Jon-Cato, 1765 HALDEN (NO); GJOLMESLI, Elisabeth, 0671 OSLO (NO)
(74) Representative: Ipsilon

(57) **Abstract**

A clamp (10) for holding a flexible slender structure comprises a housing (11) with a through hole (12), where the through hole comprises a tapered section, and a gripping element (13) arranged in the tapered section of the through hole. The gripping element is movable in the axial direction of the through hole, and the gripping element has an outer surface facing the walls of the through hole and an inner surface (18) configured to grip the flexible slender structure. A movement of the gripping element in the axial direction in the through hole causes a radial movement of at least a part of the gripping element thus providing a gripping force on a flexible slender structure arranged in the clamp.

## Description

The present invention relates to a clamp for slender structures, and particularly flexible slender structures, such as power cables or other cables, umbilicals or pipes. The invention is more particularly related to a vessel-supportable clamp for flexible slender structures.

Flexible slender structures are laid from vessels into the water, and onto the ground beneath the water, i.e. the seabed, to connect two locations which are separated by water.

In the following description, the term cable and flexible slender structure will be used interchangeably as a general term for flexible slender structure and should be understood to mean any kind of cable or pipeline that is installed from a vessel or other offshore unit.

Cables are typically laid continuously from the vessel, with the weight of the flexible slender structure in the water and above the seabed resulting in considerable tension in the flexible slender structure at the vessel interface. During the continuous laying, equipment on deck can usually provide sufficient restraining force to control the descent of the flexible slender structure to the seabed.

However, it can be necessary to lay down or pick up the cable end from the seabed, or transfer the weight of the suspended cable from one place to another, between vessels or to or from other offshore units. Thus, tension in the flexible slender structure must be restrained/supported. Further, during offshore repair or splicing/joining of a cable, it is necessary to support the suspended cable while performing the required operations and it is vital that the grip on the cable is strong enough to keep the cable in place and thereby minimize the risk of injury to the operators.

Current solutions utilize bolts, hydraulics or similar to press pads/plates together around the cable to hold it. The current solutions are either time consuming to assemble/disassemble, difficult to assemble/disassemble subsea, or do not allow good control of the radial deformation of the cable.

To ensure a desired residual contact force between a clamp and a cable, the clamp must be designed to accommodate a reduction in cable diameter due to creep of the polymer materials in the cable cross-section. In the case of a bolted-on clamp, the elasticity in the bolts may not be sufficient to compensate for the full reduction in cable diameter, thus requiring time to allow a certain degree of relaxation during clamp assembly. Hydraulic clamps, on the other hand, typically apply a uniform pressure that may lead to excessive radial deformation as a result of creep of the polymer materials in the cable cross-section.

The object of the invention is to provide a clamp for flexible slender structures such as power cables or other cables, umbilicals or pipes that meets the problems of prior art.

The object of the invention is achieved by means of the features of the patent claims.

In one embodiment, a clamp for holding a flexible slender structure comprises a housing with a through hole, where the through hole comprises a tapered section, and a gripping element arranged in the tapered section of the through hole. The gripping element is adapted to be movable in the axial direction of the through hole, and has an outer surface that faces the walls of the through hole and an inner surface that is configured to grip the flexible slender structure. A movement of the gripping element in the axial direction in the through hole thus causes a radial movement of at least a part of the gripping element.

The housing may comprise two or more housing parts which can be locked together by locking means such as bolts or other suitable means. In some embodiment, the housing parts are connected by a hinged connection.

The clamp may further comprise actuating means for initiating movement of the gripping element in the axial direction in the through hole. Such actuating means can be any means that is suitable for causing axial direction of the gripping element, such as one or more hydraulic cylinders arranged in a first end portion of the housing comprising an opening for the through hole and where the hydraulic cylinders are connected to the gripping element inside the housing. The actuating means may be causing the axial movement alone, or there may be arranged further means for moving the gripping elements. The pulling of the cable itself may also cause axial movement of the gripping device, thus providing a self-tightening function.

In one embodiment the friction between the outer surface of the gripping element and the housing is lower than the friction between the inner surface of the gripping element and the flexible slender structure when the flexible slender structure is held by the clamp. This further enhances the grip of the clamp on the cable while facilitating the tightening function of the clamp. To achieve this, the inner surface of the gripping element may comprise a number of protrusions configured to penetrate or deform the surface of the flexible slender structure.

The gripping element may be removable and replaceable.

In one embodiment, there is arranged a blocking element in the through hole for limiting the axial movement of the gripping element. The blocking element may be movable and can be configured to be fixed in different positions along the central axis of the through hole, thereby providing an adjustable grip force.

The clamp described herein can grip onto a cable or other flexible slender structure in a controlled manner by applying a radial load/deformation that allows the cable to be suspended from the clamp. The clamp can have all or some of the following features:
- Re-usable with tailor-made inserts
- Mechanically or hydraulically "activated"
- Self-tightening when tensioned
- Controllable diameter reduction

A hinged version of the clamp will allow subsea assembly, so the clamp may be used for both cable recovery, temporary hang-off, and lay-down of cable. This also facilitates clamp assembly anywhere along the cable length.

The proposed clamp limits radial deformation to a set value, thus preventing excessive deformation of the cable cross-section.

The proposed clamp may be self-tightening, i.e. the grip force/radial deformation increases with increasing cable tension, up to an adjustable maximum deformation that is limited by a physical stopper. The clamp can also be applied subsea for use during cable recovery, e.g. in relation to cable repair.

The proposed clamp is quicker to assemble than clamps that are bolted directly onto cables and is smaller, lighter and less complex than typical hydraulic clamps.

The invention will now be described in more detail by means of examples and by reference to the accompanying figures.
Figure 1a illustrates an example of a clamp according to the invention in one configuration.
Figure 1b illustrates an example of a clamp according to the invention in another configuration.
Figure 1c illustrates an example of a clamp according to the invention in yet another configuration.
Figure 2 illustrates a perspective view of an example of a clamp assembled on a cable.
Figure 3 illustrates a side view of an example of a clamp assembled on a cable.

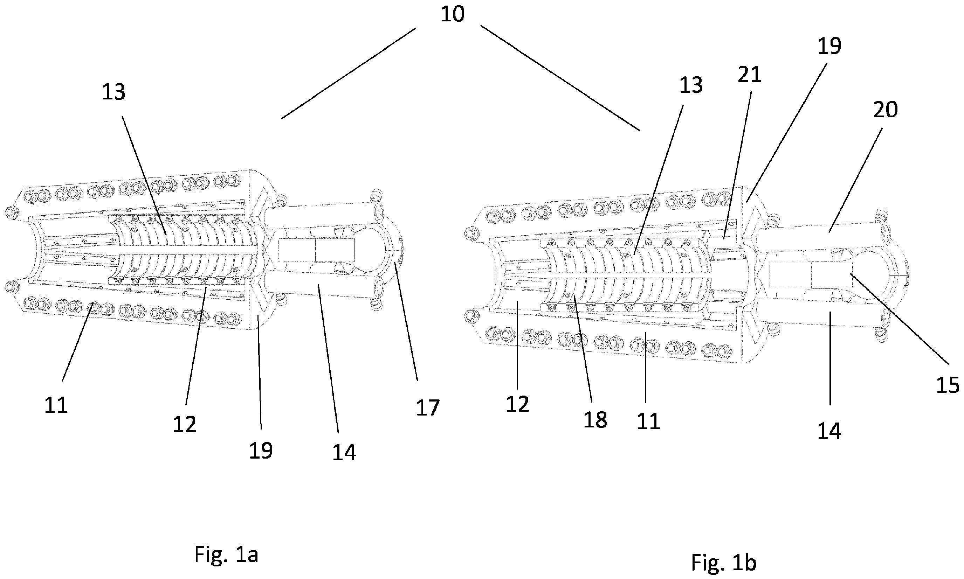

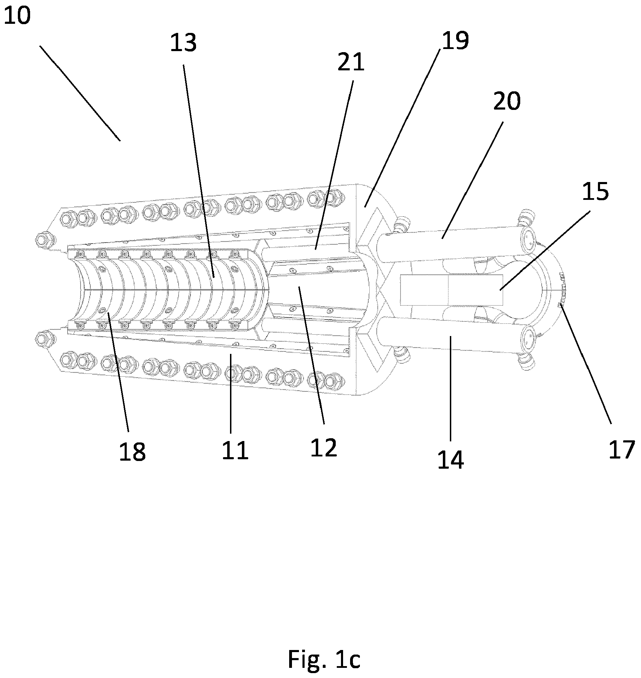

Figure 1a, b and c illustrate a cross section of a clamp 10 for securely holding a flexible slender structure. The clamp comprises an elongated housing 11 with a through hole 12 extending along a central axis of the elongated housing 11 so that the housing 11 comprises openings in the respective two end faces of the end portions of the housing. The housing may have any suitable shape but is in this example cylindrical shaped and with the through hole also being similarly shaped. In other embodiments, other shapes may be used, for example with triangular or other polygon shaped cross-section.

The through hole comprises a tapered section where the tapering extends along at least a part of it. In the example of figure 1, the whole through hole is tapered so that it is shaped as a truncated cone, but it may in other embodiments have other shapes.

A gripping element 13 is arranged in the tapered section of the through hole and is movable in the axial direction of the through hole. The gripping element has an outer surface facing the walls of the through hole and an inner surface 18 that is configured to grip the flexible slender structure. In the example, the gripping element is a hollow cylinder with inner diameter adapted to the outer diameter of the flexible slender structure which is to be held by the clamp. When the gripping element moves in the axial direction in the through hole, the tapering of the through hole causes a radial movement of at least a part of the gripping element, ie. the diameter of the gripping element is reduced. This causes a wedging effect that tightens the hold on the cable by the clamp and ensures that the cable is held securely in place by the clamp.

The gripping element 13 can be removable and replaceable in order to adapt the clamp to different flexible slender structures. In this way, the clamp can be re-used for different cables.

When the gripping element moves towards the narrow end of the through hole, the gripping force on the flexible slender structure such as a cable, increases, typically resulting in a reduction in cable diameter. In order to adjust and/or limit the reduction in cable diameter, there may be arranged a blocking element in the through hole, limiting the axial movement of the gripping element. The blocking element may be permanent in one position or there may be several positions where there can be installed/arranged a blocking element, thereby determining how much the diameter of the gripping element can change when the cable is suspended in the clamp, and thus how strong gripping force is exerted on the cable when the cable is suspended in the clamp. There may also be embodiments where the blocking element is movable and can be fixed in different positions along the central axis of the through hole, thereby providing an adjustable diameter reduction.

The movement of the gripping element, and thus the engagement of the clamp on the flexible slender structure, can be initiated by actuating means. The actuating means can be adapted to give the gripping element an initiating movement in the axial direction in the through hole, and then the pulling force of the flexible slender structure can provide the power to further move the gripping element and tighten the grip by the clamp on the flexible slender structure. The actuating means may comprise at least one hydraulic cylinder 14, as shown in the figure, or other kinds of mechanical means arranged in a first end portion 19 of the housing comprising an opening for the through hole. In the embodiment of figure 1a, 1b and 1c, there are provided two hydraulic cylinders which are arranged with the cylinder barrel 20 outside the housing and the hydraulic cylinder piston 21 extending inside the housing. The hydraulic cylinder piston is connected to the gripping element 13 and can push or pull the gripping element. The hydraulic cylinder or other actuating means can be removed after actuating the clamp, or can stay as part of the clamp to enable further reduction of the cable diameter or to provide a force in the opposite direction when the clamp is to be opened in order to release the flexible slender structure from its hold.

Figure 1a shows the clamp 10 in an initial state, i.e. prior to "activation", with the gripping element 13 near the first end portion 19 of the housing, i.e. in a retracted position in the widest part of the conical shaped through hole 12. In this state the gripping element exerts the least gripping force on a flexible slender structure placed in the clamp, i.e. the diameter of the gripping element is at its largest.

In figure 1b, the hydraulic cylinder pistons 21 have pushed the gripping element 13 along the through hole 12 to a position between the two ends of the housing 11. In this position the diameter of the gripping element 13 has been somewhat reduced by the tapered section of the through hole 12.

In figure 1c, the hydraulic cylinder pistons 21 have pushed the gripping element 13 to an extended position, to the most narrow part of the through hole 12, where the diameter reduction of the gripping element, and consequently also the diameter reduction of a cable held by the clamp, is at its largest.

In order to further enhance the clamp's hold on the flexible slender structure, the gripping element may be designed so that the friction between the outer surface of the gripping element 13 and the housing is lower than the friction between the inner surface 18 of the gripping element 13 and the flexible slender structure when the flexible slender structure is held by the clamp. In this way, the gripping element can move easily along the inner walls of the housing in the through hole, while maintaining a secure grip on the flexible slender structure. In some embodiments, the inner surface 18 of the gripping element 13 comprises a number of protrusions configured to penetrate or deform the surface of the flexible slender structure, thus increasing the grip.

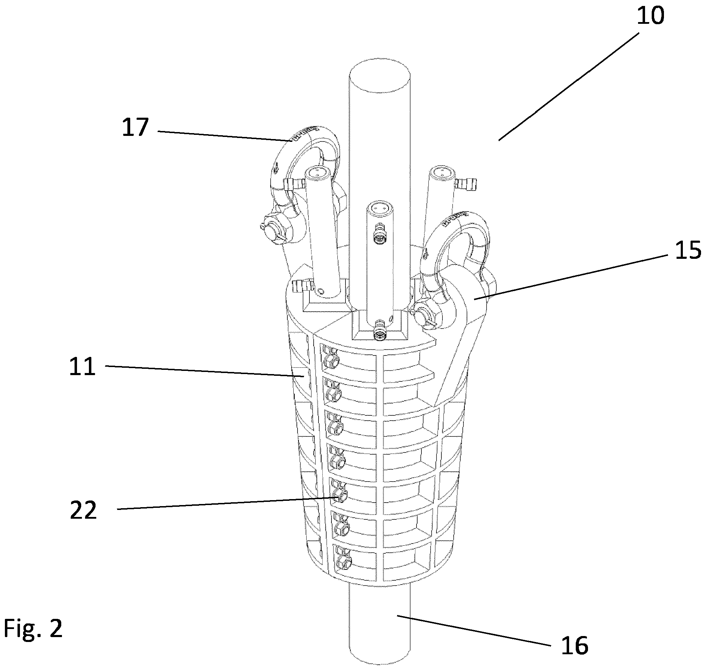

Figure 2 illustrates an example of a clamp 10 mounted onto and clamping a cable 16. The housing 11 is in this state completely surrounding the circumference of the cable 16 and the gripping element inside the clamp has been moved to a gripping position within the through hole. In the situation shown in figure 2, with the clamp 10 and cable 16 arranged substantially vertical, the weight of the cable 16 will pull downwards, thus causing the gripping element inside the clamp to move further downwards towards the narrow end of the tapered through hole, thereby causing further tightening of the grip by the clamp on the cable.

The clamp 10 comprises in the illustrated embodiment suspension means 15 connected to the housing 11. The suspension means 15 may be integrated in the housing or may be a separate part. The suspension means 15 is in this embodiment a suspension pad-eye configured to be connected to a shackle 17 for suspension from a vessel or other offshore unit.

The housing can be manufactured as one single piece, or may comprise two or more housing parts which can be locked together by locking means, such as bolts, latches, hasps, pins, etc. The housing parts can be single, separate parts or two or more parts may be connected by a hinged connection. In figure 2 two housing parts 11 have been locked together by bolts 22.

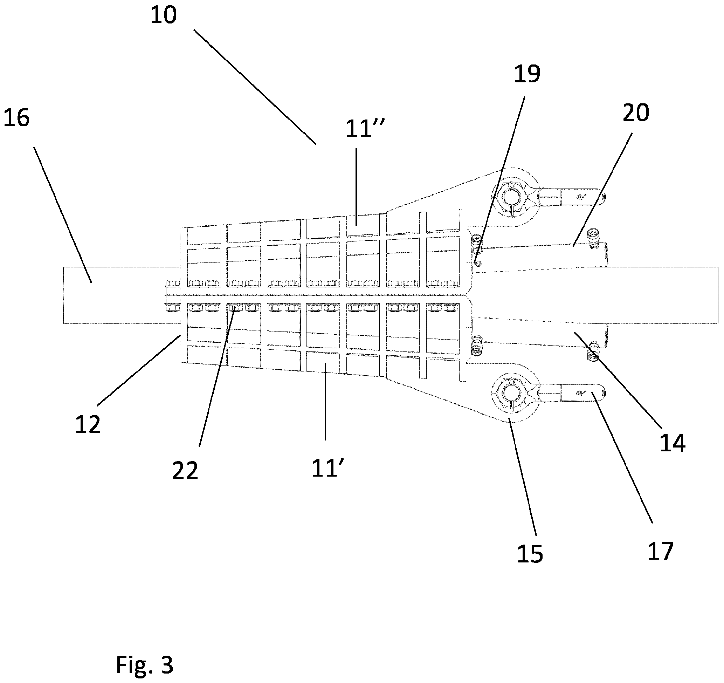

Figure 3 illustrates a side view of a clamp 10 assembled on a cable 16. In this view it can be seen that this embodiment comprises two housing parts 11', 11" which are locked together by bolts 22.In use, if the housing comprises two halves, the cable may first be laid in the curve of the gripping element of one of the housing parts, before the second housing part is arranged onto the first housing part and the two housing parts are locked together. The clamp may alternatively be mounted onto a cable that is vertically arranged as shown in figure 2. These procedures may be simpler if the two housing parts are hinged together.

### List of reference numbers:

- 10: Clamp
- 11: Housing
- 12: Through hole
- 13: Gripping element
- 14: Hydraulic cylinder
- 15: Suspension means
- 16: Cable
- 17: Shackle
- 18: Inner surface of gripping element
- 19: First end portion of housing
- 20: Cylinder barrel
- 21: Piston
- 22: Bolts

## Claims

1. Clamp (10) for holding a flexible slender structure comprising:
- a housing (11) with a through hole (12), where the through hole comprises a tapered section, and
- a gripping element (13) arranged in the tapered section of the through hole, movable in the axial direction of the through hole, where the gripping element has an outer surface facing the walls of the through hole and an inner surface (18) configured to grip the flexible slender structure, and where a movement of the gripping element in the axial direction in the through hole causes a radial movement of at least a part of the gripping element.

2. Clamp (10) according to claim 1, further comprising actuating means initiating movement of the gripping element in the axial direction in the through hole.

3. Clamp (10) according to claim 2, where the actuating means comprises at least one hydraulic cylinder (14) arranged in a first end portion of the housing comprising an opening for the through hole and being connected to the gripping element.

4. Clamp (10) according to any one of the preceding claims, where the friction between the outer surface of the gripping element (13) and the housing is lower than the friction between the inner surface (18) of the gripping element (13) and the flexible slender structure when the flexible slender structure is held by the clamp.

5. Clamp (10) according to any one of the preceding claims, where the inner surface (18) of the gripping element (13) comprises a number of protrusions configured to penetrate or deform the surface of the flexible slender structure.

6. Clamp (10) according to any one of the preceding claims where the gripping element (13) is removable and replaceable.

7. Clamp (10) according to any one of the preceding claims, where a blocking element is arranged in the through hole for limiting the axial movement of the gripping element.

8. Clamp (10) according to claim 7, where the blocking element is movable and can be fixed in different positions along the central axis of the through hole, thereby providing an adjustable grip force.

9. Clamp (10) according to any one of the preceding claims, where the housing comprises at least two housing parts which can be locked together by locking means.

10. Clamp (10) according to claim 9, where the two housing parts are connected by a hinged connection.

11. Clamp (10) according to claim 9 or 10, where the locking means are bolts.
